# EUROPEAN PATENT SPECIFICATION

(11) **EP 3 878 734 B1**
(45) Date of publication and mention of the grant of the patent: **19.07.2023**
(21) Application number: 21160235.4
(22) Date of filing: 02.03.2021
(51) Int. Cl.: B64C 9/22

(54) **GUIDING ELEMENT FOR A HIGH LIFT AIRFOIL ARRANGEMENT OF AN AIRCRAFT, HIGH LIFT AIRFOIL ARRANGEMENT AND PRODUCTION METHOD**
FÜHRUNGSELEMENT FÜR EINE HOCHAUFTRIEBSPROFILANORDNUNG EINES FLUGZEUGS, HOCHAUFTRIEBSPROFILANORDNUNG UND HERSTELLUNGSVERFAHREN
ÉLÉMENT DE GUIDAGE POUR UN AGENCEMENT DE PROFIL AÉRODYNAMIQUE HYPERSUSTENTATEUR D'UN AVION, AGENCEMENT DE PROFIL AÉRODYNAMIQUE HYPERSUSTENTATEUR ET PROCÉDÉ DE PRODUCTION

(30) Priority: 11.03.2020 DE 102020106670
(43) Date of publication of application: 15.09.2021
(73) Proprietor: Airbus Operations GmbH, 21129 Hamburg (DE)
(72) Inventor: Lorenz, Florian, 21129 Hamburg (DE); Schlipf, Bernhard, 21129 Hamburg (DE); Huber, Alexander, 21129 Hamburg (DE); Bauer, Stefan, 21129 Hamburg (DE)

(56) References cited:
- EP-A1- 2 939 921
- WO-A1-2005/077756
- US-A1- 2010 187 367
- US-A1- 2013 126 670
- US-A1- 2016 083 081

## Description

The invention relates to a guiding element for a high lift airfoil arrangement of an aircraft, a high lift airfoil arrangement for an aircraft, and to an aircraft wing as well as an aircraft equipped with said airfoil arrangement. Further, the invention relates to a method for producing a high lift airfoil arrangement for an aircraft.

Aircraft wings are usually equipped with high-lift airfoil arrangements, which influence the airflow for generating a high lift during specific flight phases. Such arrangement may for example comprise a slat supported by a track which is movably attached to a fixed leading edge of the wing. In this way the slat can be moved between a retracted position, where it is close to the fixed leading edge, and an extended or deployed position. It is usually moved on a curved path forward and downward relative to the fixed leading edge to come to the deployed position.

In most aircrafts, the guidance of a leading edge track, for example, is realized by rollers supporting the track on the upper and lower side, in combination with side rollers, see US 2016/083081 A1, and possibly with gliding pats, which may be attached to the leading edge ribs. As a part of the leading edge high-lift system, the track may be deploying and retracting a slat in certain stages of flight, thereby allowing the wing to operate at higher angles of attack (AoA).

The roller guidance may support the track in retracted condition, during movement, and while the slat is fully deployed.

WO 2018 / 197 265 A1 discloses a wing for an aircraft, comprising a main wing, a slat, and a connection assembly for movably connecting the slat to the main wing. The connection assembly comprises an elongate and curved slat track and a first bearing as well as a second bearing. The track is movably supported on the main wing by the first and second bearing.

WO 2018 / 197 649 A1 discloses a wing for an aircraft, comprising a main wing and a connection assembly movable connecting a slat to the main wing. The connection assembly comprises an elongate slat track, wherein the rear end and the intermediate portion of the slat track are mounted to the main wing by a roller bearing comprising a guide rail mounted to the main wing and a first roller unit mounted to the rear end of the slat track and engaging the guide rail. The roller bearing comprises a second roller unit mounted to the main wing and engaging an engagement surface at the intermediate portion of the slat track.

In recent concepts for wings, the upper and lower roller may be supported by at least one cantilever-roller (attached to the rib and rolling inside the track, which may also be designated as a 'support roller') and a rear roller (attached to the track itself and running inside guidance rails).

The guidance may be designed as two elements: the upper and lower rail, on which the rear roller can move while extending or retracting the slat. The rail may be attached to the leading edge ribs.

In a known high-lift airfoil arrangement of an aircraft, a slat is for example supported by a slat track which is movably attached to a fixed leading edge. The slat track with the slat at its front end can be moved forward and downward on a curved track to move into a deployed or extended position, and to move back into a retracted position. Rollers may guide the slat track on its upper side and its bottom side. For example, one roller pair can be located in the forward area of the fixed leading edge, and one roller pair can be located in the rear area, just in front of the front spar. Side rollers may provide a side load guidance of the slat track.

Depending on the wind and the flight conditions, the loads acting on a slat track can be very high and may vary in a wide range, e.g. when gusts occur. Therefore, the slat track must take high loads with strong variations, and these loads need to be transferred from the slat track to the fixed leading edge of the aircraft wing. Therefore, the guidance of the slat track must be very precise when it is moved and must have low clearances.

To guarantee a precise guidance of the slat track by various roller assemblies, a high accuracy is necessary during installation of the slat track and the roller assemblies. Many installation steps have to be performed in a specific sequence. In particular, several measurements of the position of the slat track and the rollers have to be performed, shim plates need to be installed between the different installation steps in order to adjust the roller position to the position of the slat track, and measurements have to be repeated in order to achieve the precise guidance of the slat track when it is installed. As a consequence, the installation of slat tracks is time-consuming and generates undesirable added costs.

It is the object of the invention to decrease the installation time and increase the production rate in order to reduce the production costs of high-lift airfoil arrangements.

The object is achieved by the subject matter according to the independent claims. Advantages embodiments are subject matter of the dependent claims.

The invention provides a guiding element for a high lift airfoil arrangement of an aircraft, comprising: a first part configured for being fixed to a first edge member of an high lift airfoil arrangement of an aircraft; a second part comprising at least one track support element configured for movably supporting a track device of a second edge member of the high lift airfoil arrangement, wherein the second part is movably mounted to the first part and configured for moving from a first position to a second position; and a biasing device configured for biasing the track support element in a spanwise direction of the high lift airfoil arrangement towards the track device.

In particular, the first part is fixable to the first edge member and is also referred to as fix part or fixed part. In particular the second part is movable relative to the first part and is also referred to as moving part.

In particular, the biasing direction is the spanwise direction of the wing. It may also be the spanwise direction of the high-lift airfoil arrangement. In particular, the spanwise direction may be parallel to the leading edge of the wing or the high-lift airfoil arrangement. It may also have an additional component in the direction of the longitudinal or the lateral axis of the aircraft, so that it deviates from being parallel to the leading edge of the wing or the high-lift airfoil arrangement. In particular it extends in the plane of the wing, for example between the fuselage of the aircraft and the wing tip.

Preferably, the track support element comprises a roller configured for rolling on a surface of the track device.

Preferably, the track support element comprises a gliding member configured for gliding on a surface of the track device.

Preferably, the biasing device is compressible to adapt the position of the second part according to varying positions of the track device while pressing the second part against the track device.

Preferably, the first part comprises a gliding surface for supporting the guiding element on the surface of the track device when the second part is in a retracted position. Thus, in the unlikely event of a failure, the track device remains movable and is still guided by the guiding element. In this way, the operational reliability is improved.

Preferably, a liner that is formed of, or comprising a surface coating formed of, a material with a relatively low coefficient of friction is arranged in the track contact area of the first part to form the gliding surface and to reduce friction. The material may further be a self-lubricating type of material. Thus, the liner is for example a self-lubricating liner.

Preferably, the biasing device is configured so that the first part may contact the track device when a predetermined maximum load acting against the biased track support element is exceeded.

Preferably, the biasing device comprises one or more springs pressing the second part in the direction of its extended position.

Preferably, the biasing device is configured for pressing the track device by a predetermined force against a guiding element that is located on the opposite side of the track device.

Preferably, the the biasing device comprises at least two springs having different stiffness values depending on the predetermined position of the guiding element when fixed to the first edge member.

Preferably, the guiding element comprises one or more fasteners, each fastener adapted to rigidly attach a portion of the first part to the first edge member of the airfoil arrangement and/or for retaining a corresponding spring such that the spring may provide a predetermined force to the second part in the direction of its extended position. Preferably the fasteners are formed as bolts.

Preferably, the second part is at least partly arranged within a frame or chamber formed by the first part and at least a portion of the track support element protrudes from the frame or chamber when the second part is moved in the direction of the extended position.

Preferably, the first edge member is a rib of the airfoil arrangement.

Preferably, the second edge member is movably supported by the track device, which is configured to be moved relative to the first edge member.

Preferably, the first edge member and the second edge member are leading edge members.

Preferably, the guiding element is configured as a track side guiding element for absorbing side loads acting on a track of the airfoil arrangement.

Preferably, the guiding element is configured for being mounted to an airfoil arrangement for extending and retracting the second part in the spanwise direction.

According to an aspect of the invention, a high-lift airfoil arrangement for an aircraft is provided, comprising a first edge member, a track device which is movable with respect to the first edge member and supporting a second edge member, and a guiding element according to the invention.

Preferably, the first edge member and the second edge member are leading edge members.

Preferably, the high lift airfoil arrangement is a slat arrangement.

According to a further aspect of the invention, an aircraft wing is provided, comprising a high lift airfoil arrangement according to the invention.

According to a further aspect of the invention, an aircraft is provided comprising a high lift airfoil arrangement according to the invention, and/or an aircraft wing according to the invention.

According to a still further aspect, the invention provides a method for producing a high lift airfoil arrangement for an aircraft, comprising the steps:
a) providing a first edge member of the high lift airfoil arrangement;
b) rigidly attaching to the first edge member one or more guiding elements for guiding a movable track device which is configured for supporting a second edge member of the high lift airfoil arrangement;
c) attaching the movable track device to the first edge member, wherein a surface of the track device is pressed against a movable track support element of at least one guiding element which is biased in the spanwise direction against the track device.

Preferably, in step (b), at least one pair of guiding elements is attached on opposite sides of the track device before step (c) is performed.

Preferably, at least one of the guiding elements is a guiding element according to the invention.

The design and method proposed by the invention increases the production rate of high-lift airfoil arrangements, reduces the production time and costs, and improves the operational reliability of the aircraft.

Embodiments of the invention are described in more detail with reference to the accompanying drawings.
- Fig. 1: depicts an aircraft according to the invention;
- Figs. 2a and 2b: depict an airfoil arrangement according to a preferred embodiment of the invention as a side view, wherein a slat is in a retracted position (Fig. 2a) and in a deployed position (Fig. 2b);
- Fig. 3: depicts a frontal section view of an airfoil arrangement according to a preferred embodiment of the invention;
- Fig. 4: is an enlarged partial view of Fig. 3, showing in detail the contact between the guiding element and the track device;
- Fig. 5: is a view similar to Fig. 3, however with guiding elements according to the invention arranged only at one side of the track device;
- Fig. 6: depicts a view on a guiding element according to the invention which is installed in a rib of an airfoil arrangement;
- Fig. 7: depicts a view on the opposite side of the guiding element shown in Fig. 6, which is configured for supporting a slat track;
- Fig. 8: depicts a sectional view of the guiding element installed in a rib, wherein a roller of the guiding element is in contact with a track device;
- Fig. 9: depicts a sectional view similar to Fig. 8, wherein a gliding member of the guiding element is in contact with the track device; and
- Fig. 10: depicts a front view of an aircraft according to the invention, with wings equipped with an airfoil arrangement according to the invention.

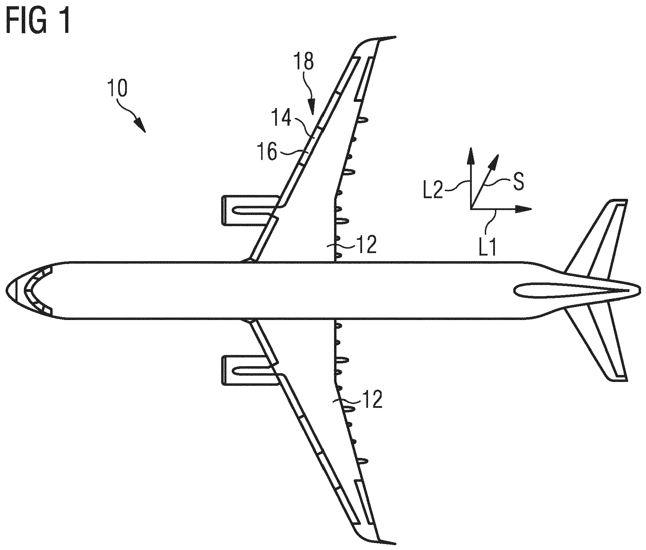

Reference is made to **Fig. 1** which depicts an aircraft 10. The aircraft 10, in a usual manner, comprises a pair of wings 12. Each wing 12 is equipped with at least one high-lift device 14, for example a slat 16.

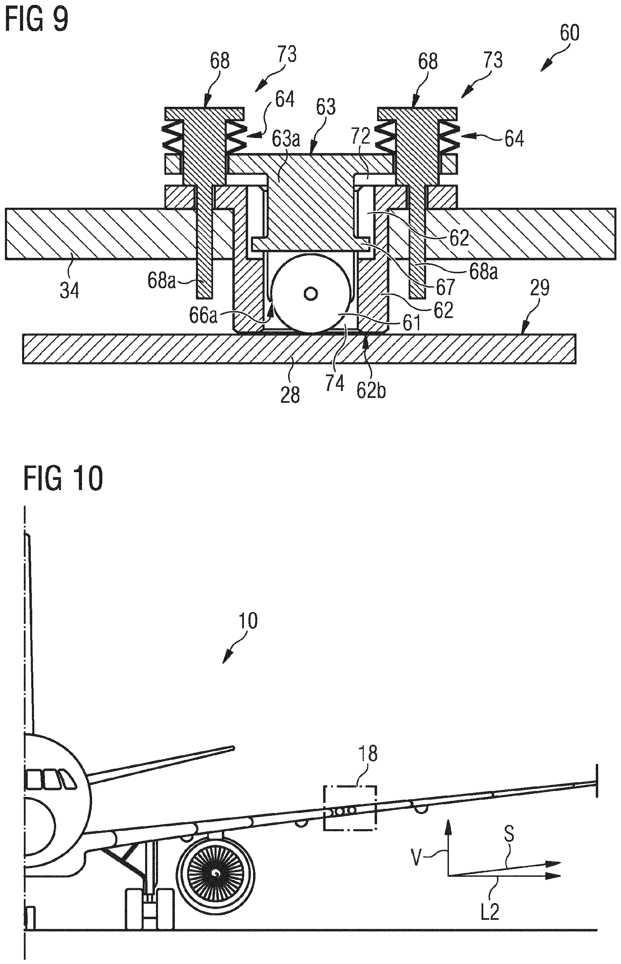

Each wing 12 extends in a direction which usually has components of three axes of the aircraft 10 being orthogonal to each other, namely a longitudinal axis L1, a lateral axis L2 and a vertical axis V, which is orthogonal to the image plane of Fig. 1 and shown in Fig. 10.

Usually the direction in which the wing 12 extends between the fuselage of the aircraft and the wing tip is called the spanwise direction S of the wing. The spanwise direction S extends in the plane of the wing 12. In particular it may be parallel to the leading edge of the wing 12. However, it may also deviate from being parallel to the leading edge in certain cases, depending on the specific shape of the wing. The spanwise direction S, is also depicted in Fig. 10, together with the vertical axis V and the lateral axis L2.

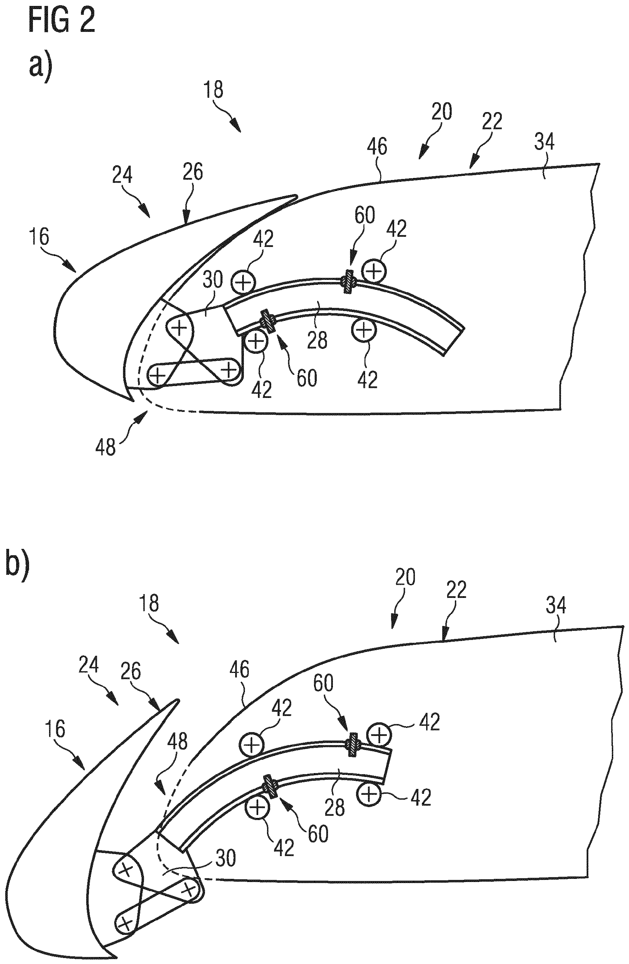

The wing 12 or a portion thereof and the high-lift device 14 may form a high-lift airfoil arrangement 18, as depicted in Fig. 2 for example. It's spanwise direction is for example the same direction as the spanwise direction S of the wing 12 or parallel thereto.

Referring now to **Figs. 2a and 2b****,** the airfoil arrangement 18 comprises a fixed edge member 20. The fixed edge member 20 may be configured as a fixed leading edge member 22.

The airfoil arrangement 18 may further include a movable edge member 24. The movable edge member 24 may be configured as a movable leading edge member 26. The movable edge member 24 may be for example the high-lift device 14, as e.g. shown in Fig. 1. In particular, the movable leading edge member 26 may be the slat 16.

The airfoil arrangement 18 further includes a track device 28. The track device 28 can be moved between at least one extended position (see Fig. 2a) and a retracted position (see Fig. 2b). The track device 28 is further configured to support the movable edge member 24. In particular, the track device 28 comprises a link 30, which connects the track device 28 with the movable edge member 24.

The fixed edge member 20 comprises a plurality of ribs 34. The ribs 34 are spaced apart from each other in a spanwise direction, for example.

The fixed edge member 20 may further comprise a guiding rail arrangement preferably attached to the ribs 34, which is not shown in the Figure. It may be configured such that the track device 28 engages the guiding rail arrangement. It may include an upper guiding rail and a lower guiding rail, which are parallel and curved.

The fixed edge member 20 may further comprise support rollers 42 fixed to the rib 34. The support rollers 42 engage the track device 28, so as to support the track device 28. The support rollers 42 are arranged as pairs, where one roller is on the upper side and one roller is on the bottom side of the track device 28.

The fixed edge member 20 further comprises an outer skin 46, which forms an aerodynamic surface. The outer skin 46 includes a track device opening 48. The track device opening 48 may be formed as a cut-out of the outer skin 46. The track device opening 48 allows for the track device 28 and the link 30 to move between the retracted position and the extended position.

Guiding elements 60 comprising track side rollers are installed in the rib 34 which forms an edge member of the airfoil arrangement 18.

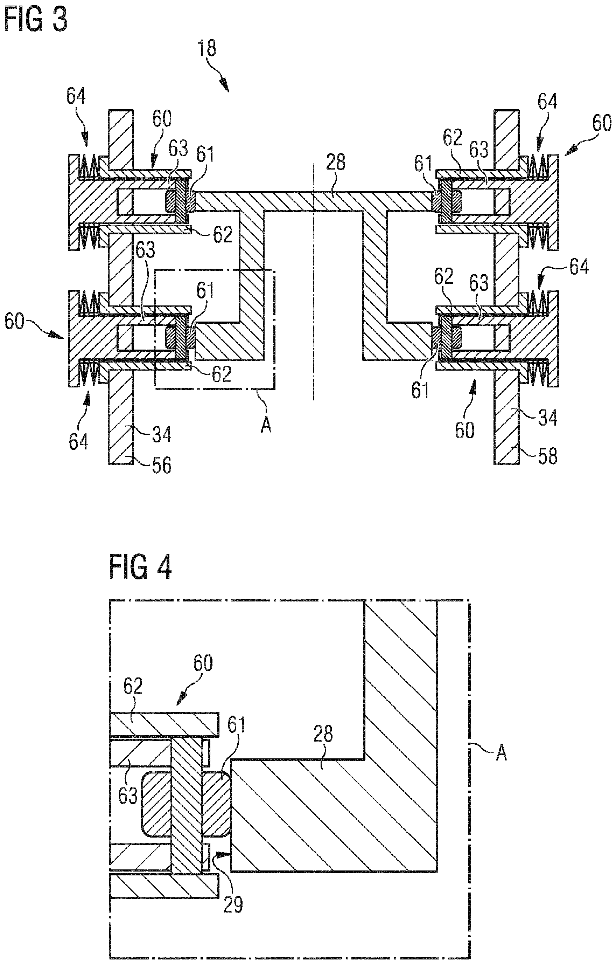

Referring now to **Fig. 3**, the guiding elements 60 attached to the ribs 34, i.e. the inboard rib 56 the outboard rib 58 of the airfoil arrangement 18, are explained in detail.

Each guiding element 60 is configured as a roller assembly which is installed within the rib 34, 56, 58 and extending through the rib 34, 56, 58 in a through-hole thereof. On the side of the ribs where the track device 28 is installed, the guiding elements 60 contact the track device 28 from opposing sides by side rollers 61 which are part of the guiding elements 60. In this way, the track device 28 is movably held between the rollers 61 arranged on both sides, so that it can move forward and backward relative to the ribs 56, 58, i.e. in the longitudinal direction of the track device 28, which is perpendicular to the plane of the drawing shown here.

The ribs 56, 58 are parts of a first edge member of an airfoil arrangement of an aircraft 10 as shown in Figure 1, in this case a fixed leading edge member 22.

Each guiding element 60 has a first part 62 fixed to the rib 56, 58, which is a leading edge rib. A second part 63 of the guiding element 60 is able to float inside the fix part 62. In this way, it can move in a direction perpendicular to the rib plane.

In the following, the first part 62 is also referred to as fixed part 62, and the second part 63, which is movable relative to the first 62, is also referred to as moving part 63.

The moving part 63 is preloaded by a biasing member formed as a spring 64 in this embodiment. In this way the moving part 63 is biased in the direction to the rib 34, and thus also to the other side of the rib 34. Thus, the moving part 63 is movably mounted to the fixed part 62 and able to move from a first position to a second position relative to the fixed part 62 and thus also relative to the rib 34, 56, 58.

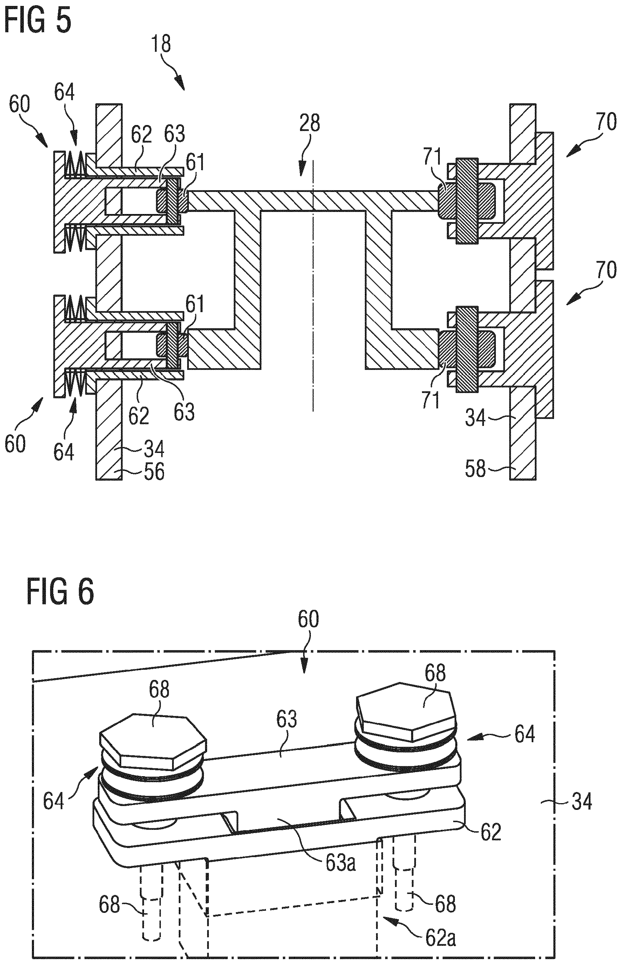

Since the biasing member or spring 64 presses the moving part 63 by a force against the track device 28, the track device 28 is pressed by that force against the guiding element 60 which is positioned on the opposite side of the track device 28. The guiding element located on the opposite side may also be configured as depicted in Fig. 5 described below.

**Figure 4** shows an enlarged partial view A of figure 4 showing the roller 61 of the guiding element 60 in contact with a portion of the track device 28 which is a slat track in this embodiment.

As shown in the figures 4 and 5, the guiding elements 60 are configured as a side guidance of track device 28. Each roller 61 is configured for rolling on a supporting surface 29 of the track device 28, which forms a roller contact surface 29. Here, the track device 28 is a slat track and the rollers 61 are designed as side rollers.

**Figure 5** is a view similar to figure 3 and shows a further embodiment of the invention. Here, the guiding elements 60 according to the invention are installed only in the rib 56 on one side of the track device 28 and referred to as first guiding elements. The second guiding elements 70 installed in rib 58 and comprising rollers 71 are not part of the invention. Nevertheless, also in this configuration the tolerances between the track device 28 and the opposing guiding elements 60, 70 are reduced to zero, even if the guiding element 60 according to the invention is only installed in the rib 56 at one side of the track device 28.

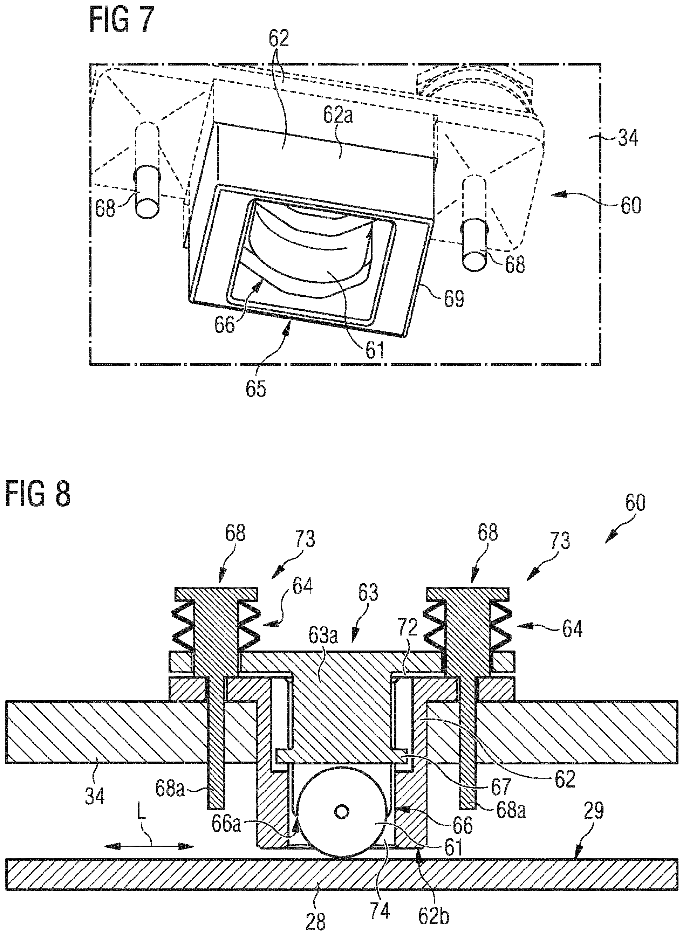

With reference to **Figs. 6** **and** **7****,** further details of the guiding element 60 are described in the following. In these figures, the roller assembly or guiding element 60 is installed in the rib 34, e.g. in the rib 56 and/or in the rib 58 as shown in figures 4 to 6. Fig. 6 shows a view on the side of rib 34 which is not facing the track device 28, whereas Fig. 7 shows a view on the side of rib 34 facing the track device 28. The rib 34 is depicted in a slightly transparent manner in both figures, so that the contours of the portion of the guiding element 60 which is within or behind the rib 34 in the respective figure are visible.

The fixed part 62 of guiding element 60 is fixedly attached to the rib 34 by two fasteners formed as bolts 68. A portion 62a of the fix part 62 extends into and through the rib 34. Thus, the fixed part 62 of the guiding element 60 extends through the rib 34 in a through hole thereof from a first side of the rib 34 to a second side of the rib 34 where the track device 28 is located (see Fig. 6).

A portion of the fixed part 62 protrudes from the second side of the rib 34, where the track device 28 is arranged or will be arranged (see Fig. 7). Track device 28 is not visible in the figure. Fig. 7 shoes a view on the area or the side of the guiding element 60, which will be in contact with the track device 28 when installed.

The moving part 63 of guiding element 60 is movably attached to the fixed part 62 at the side of the fixed part 62 opposite to the rib 34 (see Fig. 6). A portion 63a of the moving part 63 extends inside the fixed part 62 and its portion 62a and thus extends from one side of the rib through the rib 34 to the other side of the rib 34. The moving part 63 is biased by two springs 64 in the direction of the fix part 62 and thus in a direction orthogonal to the plane of the rib 34 to the track device 28. One end of each spring 64 is stationary held by abutting against a head portion of the bolt 68 (in other words each spring 64 is retained by the bolt 68), whereas the other end of each spring 64 is movable and pressing against the moving part 63.

The fixed part 62 forms a housing 69 surrounding the roller 61 of the guiding element 60. The roller 61 is mounted to the moving part 63 extending through the rib 34.

The housing 69 is in particular formed by the portion 62a of the fix part 62. The housing 69 has an opening 65 on the side where the guiding element 60 contacts the track device 28. Thus, the roller 61 which is mounted to an end portion 66 of the moving part 63, is able to extend though the opening 65 and to protrude therefrom in order to contact and to support the track device 28. The end portion 66 of moving part 63 forms in this way a track support element 66 which is movably supporting by its roller 61 the track device 28.

In addition or alternative to the roller 61, the track support element 66 formed by the end portion of the moving part 63 may comprise a gliding member which is configured for gliding on the track device 28, i.e. on its contact surface 29 depicted in Fig. 4.

**Figure 8** depicts a sectional view of the guiding element 60 as described above installed in the rib 34, where the roller 61 is in contact with the track device 28. The rib 34 is for example the rib 56, 58 shown in Figs. 3 to 5.

The track device 28 contacting the roller 61 with its surface 29 is movable in its longitudinal direction L relative to the guiding element 60 and the rib 34. The roller 61 is attached to the moving part 63 of the guiding element 60, i.e. at the end portion which forms the track support element 66 of the moving part 63. The moving part 63 floats with its portion 63a inside the fixed part 62 in a chamber 74 formed by the fix part 62. The fixed part 62 is rigidly attached to the rib 34. Rib 34 may form a fixed leading edge member.

A guidance member 67 is arranged between the fixed part 62 and the moving part 63 to keep the moving part 63, in the correct position. The guidance member 67 is formed as a protruding portion of the moving part 63 located within the fixed part 62.

The moving part 63 is loaded with the springs 64 and presses with the roller 61 against the track device 28. End portions 68a of the bolts 68 are extending through the fixed part 62 and the rib 34 to fixedly connect both. The springs 64 are held in place with the bolts 68. In this embodiment, two bolts 68 and two springs 64 are provided. Each bolt 68 together with spring 64 forms a biasing device 73. The bolts 68 have two functions, namely to provide a guide for the moving part 63, and to attach the fixed part 62 to the rib 34 which is configured as a leading edge member.

The state depicted in this figure is a normal operating situation. Here, the roller 61 is in contact with the track device 28 and a relatively small gap 72 exists between the fixed part 62 and the moving part 63. The springs 64 and the moving part 63 are pre-tensioned but not fully compressed.

**Figure 9** shows the roller assembly which forms the guiding element 60 in a state where track side loads are higher than during normal operating cases. The roller 61 is pressed by the track device 28 against the force of the springs 64, which are compressed until the fixed part 62 gets in contact with the track device 28. In that way, part of the load is transferred directly into the fixed part 62 and into the rib 34. The gap 72 between the fixed part 62 and the moving part 63 is bigger than in the state shown in Fig. 8.

In a preferred embodiment of the invention, a fixed part contact area formed by surface 62b of the fixed part 62 which gets in contact with the track device 28, is provided with a gliding liner to avoid excessive wear or fretting. Preferably the material used as the gliding liner is a self-lubricating material. The gliding liner may be formed of KAron^{®} offered by KAMAN, or any suitable equivalent.

In a further preferred embodiment of the invention, the contact area 62b comprises an indication paint applied to its surface facing the track device 28, which indicates when a contact between the contact area 62b and the track device 28 occurred. By implementing an indication paint in the contact area 62b, a complete compression of the guiding element 60 during flight is visible when maintenance checks are made.

**Figure 10** depicts a frontal view of an aircraft 10 having wings according to the invention, which comprise a high lift airfoil arrangement 18 as discussed above. The high lift airfoil arrangement 18 is equipped with guiding elements 60 as described above.

Each wing 12 extends in the spanwise S direction having components of the longitudinal axis L1, the lateral axis L2 and the vertical axis V, which axes are orthogonal to each other as described above with reference to Figure 1. In Figure 10, the longitudinal axis L1 is orthogonal to the image plane.

In the example shown here, the high lift airfoil arrangement is configured as a slat arrangement. However, the high lift airfoil arrangement can also be a flap arrangement or it can be configured as a flap arrangement

An example of a method for producing a high lift airfoil arrangement for an aircraft according to the invention is described in the following with reference to Figs. 2 and 8.

In a first step, a first edge member 20 formed by a rib 34 of a high lift airfoil arrangement 18 is provided.

Then, one or more guiding elements 60 as described above, which are configured for guiding a movable track device 28, are rigidly attached to the first edge member or rib 34. The track device 28 has the function to support a second edge member 24 of the high lift airfoil arrangement 18, which may be a slat 16.

Thereafter, the track device 28 is attached to the first edge member 20, i.e. to the rib 34, wherein a surface 29 of the track device 28 is pressed against a movable track support element formed by a portion 66 of the moving part 63 of the guiding element 60. During installation of the track device 28, the track support element 66 is biased against the track device 28.

Before the track device 28 is attached to the first edge member 22, at least one pair of first and second guiding elements 60 may be attached on opposite sides of the location of the track device 28.

A guiding element according to the invention as described above may be used as at least one of the first and second guiding elements 60.

In particular, all guiding elements 60 may be installed before the track device 28 is installed.

The guiding element 60 according to the invention absorbs all tolerances and makes measurements and shim installations obsolete, which are necessary in the prior art during the production of high-lift airfoil arrangements. The spring-loaded roller assembly forming the guiding element 60 is equipped with biasing elements in form of springs 64 having a biasing force or spring tension which is designed in a way that all operating loads can be transferred into the 34 without exceeding the spring deformation limit.

In further preferred embodiments, different guiding elements 60 having different biasing forces or spring stiffness are installed in one rib 34, 56, 58. The biasing force or spring stiffness is selected according to the position of the guiding element within the rib 34, 56, 58, depending on the load which is transferred at that position from the track device 28 via the guiding element 16 to the rib 34, 56, 58.

The invention allows a quicker installation process without measurements and packer or shim installation. The roller loads can be limited to normal operating loads. The invention effects a gap compensation in case of material wear. No gaps and free play are achieved. The track installation is feasible with roller already installed. An indication of exceeded load can be implemented. The invention relates to an increased reliability of high lift airfoil arrangements and improves the safety of aircrafts. In particular, even in case of a failure, the track device is kept movable.

Since the guiding element 60 is configured to support the track device 28 in a sliding manner with its fix part 62 in addition to the roller 61 when usual loads ere exceeded, operation of the airfoil arrangement, i.e. movement of the movable edge member 24 or slat 16 may be retained, even in a failure condition.

### List of reference signs:

- 1: slat
- 2: slat track
- 3: fix leading edge
- 4: rollers
- 10: aircraft
- 12: wing
- 14: high-lift device
- 16: slat
- 18: airfoil arrangement
- 20: fixed edge member
- 22: fixed leading edge member
- 24: movable edge member
- 26: movable leading edge member
- 28: track device
- 29: surface
- 30: link
- 34: ribs
- 42: support roller
- 46: outer skin
- 48: track device opening
- 56: inboard rib
- 58: outboard rib
- 60: guiding element
- 61: roller / side roller
- 62: first part or fixed part
- 62a: portion of first part
- 62b: contact surface of first part
- 63: second part or moving part
- 63a: portion of second part
- 64: spring / biasing member
- 65: opening
- 66: track support element / end portion of moving part
- 66a: gliding member
- 67: guidance member
- 68: fastener / bolt
- 68a: end portion
- 69: housing
- 70: second guiding element
- 71: rollers
- 72: gap
- 73: biasing device
- 74: chamber

- L: longitudinal direction of the track device
- L1: longitudinal direction of the aircraft
- L2: lateral direction of the aircraft
- V: vertical direction of the aircraft
- S: spanwise direction of the wing or the high-lift airfoil arrangement

## Claims

1. Guiding element (60) for a high lift airfoil arrangement (18) of an aircraft (10), comprising:
a first part (62) configured for being fixed to a first edge member (34, 56, 58) of a high lift airfoil arrangement (18) of an aircraft (10);
a second part (63) comprising at least one track support element (66) configured for movably supporting a track device (28) of a second edge member (16, 24, 26) of the high lift airfoil arrangement (18),
**characterised in that**
the second part (63) is movably mounted to the first part (62) and configured for moving from a first position to a second position;
and **in that** the guiding element (60) comprises a biasing device (73) configured for biasing the track support element (66) in the spanwise direction (S) of the high lift airfoil arrangement (18) towards the track device (28).

2. Guiding element according to claim 1, wherein the track support element (66) comprises a roller (61) configured for rolling on a surface (29) of the track device (28).

3. Guiding element according to claim 1 or 2, wherein the track support element (66) comprises a gliding member (62b) configured for gliding on a surface (29) of the track device (28).

4. Guiding element according to any of the preceding claims, wherein the biasing device (73) is compressible to adapt the position of the second part (63) according to varying positions of the track device (28) while pressing the second part (63) against the track device (28).

5. Guiding element according to any of the preceding claims, wherein the first part (62) comprises a gliding surface (62b) for supporting the guiding element (60) on the surface (29) of the track device (28) when the second part (63) is in a retracted position.

6. Guiding element according to any of the preceding claims, wherein the biasing device (73) is configured to allow the first part (62) to contact the track device (28) when a predetermined maximum load acting against the biased track support element (66) is exceeded.

7. Guiding element according to any of the preceding claims, wherein the biasing device (73) comprises one or more springs (64) pressing the second part (63) in the direction of its extended position.

8. Guiding element according to any of the preceding claims, wherein the biasing device (73) comprises at least two springs (64) having different stiffness values depending on the predetermined position of the guiding element (60) when fixed to the first edge member (34, 56, 58).

9. Guiding element according to any of the preceding claims, comprising one or more fasteners (68) adapted to rigidly attach the first part (62) to the first edge member (34, 56, 58) of the airfoil arrangement (18) and/or for holding one or more springs (64) in place which press the second part (63) in the direction of its extended position.

10. Guiding element according to any of the preceding claims, wherein the second part (63) is at least partly arranged within a chamber (74) formed by the first part (62) and at least a portion of the track support element (66) protrudes from the chamber (74) when the second part (63) is moved in the direction of the extended position.

11. Guiding element according to any of the preceding claims, wherein
11.1 the first edge member (34, 56, 58) is a rib (34) of the airfoil arrangement (18), and/or
11.2 the second edge member (16, 24, 26) is movably supported by the track device (28) which is configured to be moved relative to the first edge member (34, 56, 58), and/or
11.3 the first edge member (34, 56, 58) and the second edge member (16, 24, 26) are leading edge members, and/or
11.4 the biasing device (73) is configured for pressing the track de-vice (28) by a force against a guiding element (60, 70) located on the opposite side of the track device (28).

12. Guiding element according to any of the preceding claims, being configured
12.1. as a track side guiding element (60) for absorbing side loads acting on a slat track (28) of the airfoil arrangement (18), and/or
12.2. for being mounted to an airfoil arrangement (18) for extending and retracting the second part (63) in the spanwise direction.

13. High lift airfoil arrangement for an aircraft (10), comprising
a first edge member (34, 56, 58),
a track device (28) which is movably attached to the first edge member (34, 56, 58) and supporting a second edge member (16, 24, 26),
and a guiding element (60) according to any of the preceding claims.

14. High lift airfoil arrangement according to claim 13, wherein the first edge member (34, 56, 58) and the second edge member (16, 24, 26) are leading edge members.

15. High lift airfoil arrangement according to claim 13 or 14, wherein the high lift airfoil arrangement (18) is a slat arrangement.

16. Aircraft wing comprising a high lift airfoil arrangement (18) according to any of the claims 13 to 15.

17. Aircraft comprising a high lift airfoil arrangement (18) according to any of the claims 13 to 15, or an aircraft wing according to claim 16.

18. Method for producing a high lift airfoil arrangement (18) for a wing (12) of an aircraft (10), comprising the steps:
a) providing a first edge member (34, 56, 58) of the high lift airfoil arrangement (18),
b) rigidly attaching to the first edge member (34, 56, 58) one or more guiding elements (60) for guiding a movable track device (28) configured for supporting a second edge member (16, 24, 26) of the high lift airfoil arrangement (18);
c) attaching the track device (28) to the first edge member (34, 56, 58), wherein a surface (29) of the track device (28) is pressed against a movable track support element (66) of the guiding element (60) which is biased in the spanwise direction (S) against the track de-vice (28).

19. Method according to claim 18, wherein in step (b) at least two guiding elements (60, 70) are attached on opposite sides of the installation position of the track device (28) before step (c) is performed.

20. Method according to claim 18 or 19, wherein at least one of the guiding elements (60, 70) is a guiding element (60) according to any of claims 1 to 12.

## Patentansprüche

1. Führungselement (60) für eine Hochauftriebs-Tragflächenanordnung (18) eines Flugzeugs (10), umfassend:
einen ersten Teil (62), der so konfiguriert ist, dass er an einem ersten Randelement (34, 56, 58) einer Hochauftriebsschaufel
Anordnung (18) eines Flugzeugs (10) zu befestigen;
ein zweites Teil (63), das mindestens ein Laufbahnträgerelement (66) umfasst, das so konfiguriert ist,
dass es eine Laufbahnvorrichtung (28) eines Flugzeugs (10) beweglich trägt
einer Spurvorrichtung (28) eines zweiten Randelements (16, 24, 26) der Hochauftriebsschaufelanordnung (18),
**dadurch gekennzeichnet, dass**
der zweite Teil (63) beweglich an dem ersten Teil (62) angebracht ist und so konfiguriert ist, dass er sich von einer ersten Position in eine zweite Position bewegt; und
ersten Position in eine zweite Position zu bewegen;
und dass das Führungselement (60) eine Vorspannvorrichtung (73) umfasst, die so konfiguriert ist, dass sie das Spurhalteelement (66) in der Spannweitenrichtung (S) der Hochauftriebsschaufelanordnung (18) in Richtung der Spurvorrichtung (28) vorspannt.

2. Führungselement nach Anspruch 1, wobei das Laufbahnträgerelement (66) eine Rolle (61) umfasst, die zum Abrollen auf einer Oberfläche (29) der Laufbahnvorrichtung (28) konfiguriert ist.

3. Führungselement nach Anspruch 1 oder 2, wobei das Schienenträgerelement (66) ein Gleitelement (62b) aufweist, das zum Gleiten auf einer Oberfläche (29) der Schienenvorrichtung (28) ausgebildet ist.

4. Führungselement nach einem der vorhergehenden Ansprüche, wobei die Vorspannvorrichtung (73) zusammendrückbar ist, um die Position des zweiten Teils (63) entsprechend den variierenden Positionen der Schienenvorrichtung (28) anzupassen, während das zweite Teil (63) gegen die Schienenvorrichtung (28) gedrückt wird.

5. Führungselement nach einem der vorhergehenden Ansprüche, wobei der erste Teil (62) eine Gleitfläche (62b) zum Abstützen des Führungselements (60) auf der Oberfläche (29) der Schienenvorrichtung (28) aufweist, wenn sich der zweite Teil (63) in einer zurückgezogenen Position befindet.

6. Führungselement nach einem der vorhergehenden Ansprüche, wobei die Vorspannvorrichtung (73) so konfiguriert ist, dass sie es dem ersten Teil (62) ermöglicht, die Schienenvorrichtung (28) zu berühren, wenn eine vorbestimmte maximale Last, die auf das vorgespannte Schienenstützelement (66) wirkt, überschritten wird.

7. Führungselement nach einem der vorhergehenden Ansprüche, wobei die Vorspannvorrichtung (73) eine oder mehrere Federn (64) umfasst, die das zweite Teil (63) in Richtung seiner ausgefahrenen Position drücken.

8. Führungselement nach einem der vorhergehenden Ansprüche, wobei die Vorspannvorrichtung (73) mindestens zwei Federn (64) mit unterschiedlichen Steifigkeitswerten aufweist, die von der vorbestimmten Position des Führungselements (60) abhängen, wenn es an dem ersten Kantenelement (34, 56, 58) befestigt ist.

9. Führungselement nach einem der vorhergehenden Ansprüche, mit einem oder mehreren Befestigungselementen (68), die geeignet sind, das erste Teil (62) starr an dem ersten Randelement (34, 56, 58) der Tragflächenanordnung (18) zu befestigen und/oder eine oder mehrere Federn (64) festzuhalten, die das zweite Teil (63) in Richtung seiner ausgefahrenen Position drücken.

10. Führungselement nach einem der vorhergehenden Ansprüche, wobei das zweite Teil (63) zumindest teilweise innerhalb einer durch das erste Teil (62) gebildeten Kammer (74) angeordnet ist und zumindest ein Teil des Spurhalteelements (66) aus der Kammer (74) herausragt, wenn das zweite Teil (63) in Richtung
Richtung der ausgefahrenen Position bewegt wird.

11. Führungselement nach einem der vorhergehenden Ansprüche, wobei
11.1 das erste Kantenelement (34, 56, 58) eine Rippe (34) der Tragflächenanordnung (18) ist, und/oder
11.2 das zweite Randelement (16, 24, 26) durch die relativ zum ersten Randelement (16, 24, 26) bewegbare Nachführeinrichtung (28) beweglich gelagert ist, die
relativ zum ersten Randelement (34, 56, 58) bewegt werden kann, und/oder
11.3 das erste Kantenelement (34, 56, 58) und das zweite Kantenelement (16, 24, 26) sind Vorderkantenelemente
Elemente sind, und/oder
11.4 die Vorspannvorrichtung (73) so konfiguriert ist, dass sie die Schienenentschärfung (28) mit einer Kraft gegen ein
Führungselement (60, 70) zu drücken, das sich auf der gegenüberliegenden Seite der Spurvorrichtung (28) befindet.

12. Führungselement nach einem der vorhergehenden Ansprüche, das ausgebildet ist
12.1. als spurseitiges Führungselement (60) zur Aufnahme von Seitenlasten, die auf eine Lamellenbahn (28) der Tragflügelanordnung (18) wirken, und/oder
12.2. zur Anbringung an einer Tragflügelanordnung (18) zum Ausfahren und Einfahren des zweiten Teils (63) in Spannweitenrichtung.

13. Hochauftriebs-Tragflächenanordnung für ein Flugzeug (10), mit
ein erstes Randelement (34, 56, 58),
eine Schienenvorrichtung (28), die beweglich an dem ersten Randelement (34, 56, 58) angebracht ist und ein
zweiten Randelement (16, 24, 26) trägt,
und ein Führungselement (60) nach einem der vorhergehenden Ansprüche.

14. Hochauftriebsschaufelanordnung nach Anspruch 13, wobei das erste Kantenelement (34, 56, 58) und das zweite Kantenelement (16, 24, 26) Vorderkantenelemente sind.

15. Hochauftriebs-Tragflächenanordnung nach Anspruch 13 oder 14, wobei die Hochauftriebs-Tragflächenanordnung (18) eine Lamellenanordnung ist.

16. Flugzeugflügel mit einer Hochauftriebs-Tragflächenanordnung (18) nach einem der Ansprüche 13 bis 15.

17. Luftfahrzeug mit einer Hochauftriebs-Tragflächenanordnung (18) nach einem der Ansprüche 13 bis 15 oder ein Luftfahrzeugflügel nach Anspruch 16.

18. Verfahren zur Herstellung einer Hochauftriebs-Tragflächenanordnung (18) für einen Flügel (12) eines Flugzeugs (10), mit den Schritten:
a) Bereitstellen eines ersten Randelements (34, 56, 58) der Hochauftriebs-Tragflächenanordnung (18),
b) starres Befestigen eines oder mehrerer Führungselemente (60) an dem ersten Randelement (34, 56, 58) zum
Führen einer beweglichen Schienenvorrichtung (28), die zum Tragen eines zweiten Randelements (16, 24, 26) der Hochauftriebsschaufelanordnung (18) konfiguriert ist;
c) Befestigen der Laufbahnvorrichtung (28) an dem ersten Randelement (34, 56, 58), wobei eine Oberfläche (29) der Laufbahnvorrichtung (28) gegen ein bewegliches Laufbahnträgerelement (66) des Führungselements (60) gedrückt wird, das in der Spannweitenrichtung (S) gegen die Laufbahnvorrichtung (28) vorgespannt ist.

19. Verfahren nach Anspruch 18, wobei in Schritt (b) mindestens zwei Führungselemente (60, 70) auf gegenüberliegenden Seiten der Einbauposition der Gleiseinrichtung (28) angebracht werden, bevor Schritt (c) durchgeführt wird.

20. Verfahren nach Anspruch 18 oder 19, wobei mindestens eines der Führungselemente (60, 70) ein Führungselement (60) nach einem der Ansprüche 1 bis 12 ist.

## Revendications

1. Élément de guidage (60) pour un arrangement de profil aérodynamique à grande portance (18) d'un aéronef (10), comprenant :
une première partie (62) configurée pour être fixée à un premier élément de bord (34, 56, 58) d'un dispositif (18) de profil aérodynamique à grande portance d'un aéronef (10) (18) d'un aéronef (10) ;
une deuxième partie (63) comprenant au moins un élément de support de piste (66) configuré pour supporter de manière mobile
un dispositif de piste (28) d'un deuxième élément de bord (16, 24, 26) de la voilure haute portance (18),
**caractérisé en ce que**
la deuxième partie (63) est montée mobile sur la première partie (62) et configurée pour passer d'une première position à une deuxième position
première position à une deuxième position ;
et **en ce que** l'élément de guidage (60) comprend un dispositif de sollicitation (73) configuré pour solliciter l'élément de support de piste (66) dans la direction de l'envergure (S) de l'arrangement de profil aérodynamique à grande portance (18) vers le dispositif de piste (28).

2. Elément de guidage selon la revendication 1, dans lequel l'élément de support de piste (66) comprend un rouleau (61) configuré pour rouler sur une surface (29) du dispositif de piste (28).

3. Élément de guidage selon la revendication 1 ou 2, dans lequel l'élément de support de piste (66) comprend un élément de glissement (62b) configuré pour glisser sur une surface (29) du dispositif de piste (28).

4. Elément de guidage selon l'une quelconque des revendications précédentes, dans lequel le dispositif de sollicitation (73) est compressible pour adapter la position de la deuxième partie (63) en fonction des positions variables du dispositif de voie (28) tout en pressant la deuxième partie (63) contre le dispositif de voie (28).

5. Elément de guidage selon l'une quelconque des revendications précédentes, dans lequel la première partie (62) comprend une surface de glissement (62b) pour soutenir l'élément de guidage (60) sur la surface (29) du dispositif de voie (28) lorsque la deuxième partie (63) est dans une position rétractée.

6. Elément de guidage selon l'une quelconque des revendications précédentes, dans lequel le dispositif de sollicitation (73) est configuré pour permettre à la première partie (62) d'entrer en contact avec le dispositif de voie (28) lorsqu'une charge maximale prédéterminée agissant contre l'élément de support de voie sollicité (66) est dépassée.

7. Elément de guidage selon l'une quelconque des revendications précédentes, dans lequel le dispositif de sollicitation (73) comprend un ou plusieurs ressorts (64) pressant la deuxième partie (63) dans la direction de sa position étendue.

8. Elément de guidage selon l'une quelconque des revendications précédentes, dans lequel le dispositif de sollicitation (73) comprend au moins deux ressorts (64) ayant des valeurs de rigidité différentes en fonction de la position prédéterminée de l'élément de guidage (60) lorsqu'il est fixé au premier élément de bord (34, 56, 58).

9. Elément de guidage selon l'une quelconque des revendications précédentes, comprenant une ou plusieurs attaches (68) adaptées pour fixer rigidement la première partie (62) au premier élément de bord (34, 56, 58) de l'arrangement de profil aérodynamique (18) et/ou pour maintenir en place un ou plusieurs ressorts (64) qui pressent la deuxième partie (63) dans la direction de sa position étendue.

10. Elément de guidage selon l'une quelconque des revendications précédentes, dans lequel la deuxième partie (63) est au moins partiellement disposée dans une chambre (74) formée par la première partie (62) et au moins une partie de l'élément de support de voie (66) fait saillie de la chambre (74) lorsque la deuxième partie (63) est déplacée dans la direction de la position déployée. direction de la position déployée.

11. Elément de guidage selon l'une quelconque des revendications précédentes, dans lequel
11.1 le premier élément de bord (34, 56, 58) est une nervure (34) du profil aérodynamique (18), et/ou
11.2 le deuxième élément de bord (16, 24, 26) est supporté de manière mobile par le dispositif de roulement (28) qui est
configuré pour être déplacé par rapport au premier élément de bord (34, 56, 58), et/ou
11.3 le premier élément de bord (34, 56, 58) et le deuxième élément de bord (16, 24, 26) sont des éléments de bord d'attaque, et/ou
d'attaque, et/ou
11.4 le dispositif de sollicitation (73) est configuré pour presser le déflecteur de voie (28) par une force contre un élément de guidage (60, 70) situé à l'extrémité de la voie (34, 56, 58), et/ou contre un élément de guidage (60, 70) situé sur le côté opposé du dispositif de chenille (28).

12. Elément de guidage selon l'une quelconque des revendications précédentes, étant configuré
12.1. en tant qu'élément de guidage (60) du côté de la voie pour absorber les charges latérales agissant sur une voie à lamelles (28) de l'agencement de profils aérodynamiques (18), et/ou
12.2. pour être monté sur un dispositif de voilure (18) afin d'étendre et de rétracter la seconde partie (63) dans la direction de l'envergure.

13. Dispositif de voilure à grande portance pour un aéronef (10), comprenant
un premier élément de bord (34, 56, 58),
un dispositif de roulement (28) fixé de manière mobile au premier élément de bord (34, 56, 58) et supportant un deuxième élément de bord (16, 24, 25, 26)
second élément de bord (16, 24, 26),
et un élément de guidage (60) selon l'une quelconque des revendications précédentes.

14. Dispositif de profil aérodynamique à grande portance selon la revendication 13, dans lequel le premier élément de bord (34, 56, 58) et le deuxième élément de bord (16, 24, 26) sont des éléments de bord d'attaque.

15. Dispositif de profil aérodynamique à grande portance selon la revendication 13 ou 14, dans lequel le dispositif de profil aérodynamique à grande portance (18) est un dispositif à lamelles.

16. Aile d'avion comprenant un profil à grande portance (18) selon l'une des revendications 13 à 15.

17. Aéronef comprenant un profil à grande portance (18) selon l'une des revendications 13 à 15, ou une aile d'avion selon la revendication 16.

18. Procédé de fabrication d'un profil à grande portance (18) pour une aile (12) d'un aéronef (10), comprenant les étapes suivantes
a) fournir un premier élément de bord (34, 56, 58) du profil aérodynamique à grande portance (18),
b) fixer rigidement au premier élément de bord (34, 56, 58) un ou plusieurs éléments de guidage (60) pour
guider un dispositif de rail mobile (28) configuré pour supporter un deuxième élément de bord (16, 24, 26) de l'arrangement de voilure à haute portance (18)
de l'ensemble de profils aérodynamiques à grande portance (18) ;
c) fixer le dispositif de piste (28) au premier élément de bord (34, 56, 58), dans lequel une surface (29) du dispositif de piste (28) est pressée contre un élément de support de piste mobile (66) de l'élément de guidage (60) qui est sollicité dans la direction de l'envergure (S) contre le dispositif de piste (28).

19. Procédé selon la revendication 18, dans lequel, à l'étape (b), au moins deux éléments de guidage (60, 70) sont fixés sur les côtés opposés de la position d'installation du dispositif de chenille (28) avant l'exécution de l'étape (c).

20. Procédé selon la revendication 18 ou 19, dans lequel au moins un des éléments de guidage (60, 70) est un élément de guidage (60) selon l'une des revendications 1 à 12.
